# EUROPÄISCHE PATENTSCHRIFT

(11) **EP 4 511 190 B1**
(45) Veröffentlichungstag und Bekanntmachung des Hinweises auf die Patenterteilung: **18.03.2026**
(21) Anmeldenummer: 23719788.4
(22) Anmeldetag: 20.04.2023
(51) Int. Cl.: B23Q 11/08

(54) **WERKZEUGMASCHINE MIT SCHUTZBALG**
MACHINE TOOL WITH A PROTECTIVE BELLOWS
MACHINE-OUTIL AVEC SOUFFLET DE PROTECTION

(30) Priorität: 22.04.2022 DE 102022109735
(43) Veröffentlichungstag der Anmeldung: 26.02.2025
(73) Patentinhaber: CHIRON Group SE, 78532 Tuttlingen (DE)
(72) Erfinder: VUADENS, Samuel, 1925 Finhaut (CH); FOURNIER, Pierre, 1973 Nax (CH); METTAN, Blaise, 1902 Evionnaz (CH); MARET, Dylan, 1920 Martigny (CH)
(74) Vertreter: Witte, Weller & Partner Patentanwälte mbB
(86) Internationale Anmeldenummer: PCT/EP2023/060339
(87) Internationale Veröffentlichungsnummer: WO 2023/203154

(56) Entgegenhaltungen:
- DE-A1- 102016 117 417
- DE-A1- 4 309 719
- GB-A- 919 144
- US-A1- 2013 220 092

## Beschreibung

Die vorliegende Offenbarung befasst sich allgemein mit Werkzeugmaschinen für die spanende Bearbeitung, insbesondere für die feinmechanische Bearbeitung. Insbesondere bezieht sich die vorliegende Offenbarung auf Gestaltungen von Schutzabdeckungen zur Abtrennung/Abschirmung eines Arbeitsraums einer Werkzeugmaschine. In beispielhaften Ausgestaltungen bezieht sich die vorliegende Offenbarung auf kompakt gestaltete Werkzeugmaschinen mit kleinem Arbeitsraum. Derartige Werkzeugmaschinen werden beispielsweise zur Herstellung von Teilen in der Uhrenindustrie, Schmuckindustrie und/oder Medizingeräteindustrie verwendet. Andere Anwendungen sind denkbar.

Aus der DE 43 09 719 A1 ist eine Vorrichtung zur Entsorgung von Stäuben beim Herstellen von Elektroden für die Funkenerosion bekannt. Aus der DE 199 47 268 C1, der DE 78 12 581 U1 und der DE 39 36 640 A1 sind Befestigungssysteme für Faltenbälge bekannt, die bei Fahrzeugen oder Haushaltsgeräten verwendbar sind. Aus der US 5,607,269 A ist eine Knochenfräsmaschine bekannt, die eine Werkzeugspindel mit einem Fräswerkzeug aufweist, wobei sich die Werkzeugspindel durch eine Manschette erstreckt, die zur Abdeckung dient.

Aus der EP 0 978 349 A2 ist eine Werkzeugmaschine mit spezifischer Maschinenkinematik und einer beweglichen Abdeckung für deren beweglichen Bearbeitungskopf bekannt. Aus der WO 2018/130538 A1 ist eine Dentalbearbeitungsmaschine mit einer Membran aus einem hochelastischen Material bekannt, durch die sich ein beweglicher Werkstückarm erstreckt. Aus der CN 105832436 A ist eine Dentalbearbeitungsmaschine mit einer Arbeitsspindel bekannt, die sich durch eine elastische Membran hindurch erstreckt.

Aus der DE 16 27 069 A1 ist eine Späneschutzvorrichtung, insbesondere für Fräsmaschinen, bekannt, die die Form eines aus einem Kettengeflecht bestehenden Vorhanges aufweist, der vertikal hängend auf mindestens einer Seite den Raum um das zerspanende Werkzeug abschirmt.

Aus der DE 10 2016 117 417 A1 ist eine Abdeckung für eine Werkzeugmaschine gekannt, die eine Aussparung in einer Arbeitsraumbegrenzung bereitstellt. Die Abdeckung umfasst zwei Paare aus beweglichen Schutzabdeckungen, die zueinander um 90° versetzt orientiert sind. Die Aussparung ist zwischen den Schutzabdeckungen angeordnet. Die Schutzabdeckungen sind als Rollo oder Faltenbalg gestaltet. Eine die Aussparung durchragende Spindel ist in zwei Achsen in einer durch die Abdeckung definierten Ebene translatorisch bewegbar. Die Spindel bewegt bei ihrer translatorischen Bewegung die Schutzabdeckungen automatisch mit.

Bei der spanenden Bearbeitung werden üblicherweise Prozessfluide verwendet, insbesondere sogenanntes Kühlschmiermittel (KSS). Diese kühlen das Werkstück und das Werkzeug. Späne und sonstiger Abrieb werden vom Kühlschmiermittel von der Bearbeitungsstelle weggespült. Bei der Bearbeitung selbst entstehen im Arbeitsraum also Späne, ferner ist mit Werkzeugabrieb und einem nicht unerheblichen Eintrag an Kühlschmiermittel (gegebenenfalls vermischt mit Spänen, Abrieb und ähnlichem) zu rechnen.

Deshalb sind Arbeitsräume von Werkzeugmaschinen regelmäßig eingehaust. Dies erfolgt einerseits gegenüber der Umgebung (beispielsweise Zugangsöffnung für eine Bedienperson). Jedoch wird auch eine Abschirmung gegenüber Komponenten der Maschinenkinematik angestrebt, beispielsweise gegenüber Führungen, Antrieben, Motoren und ähnlichem. Da die Bearbeitung von Werkstücken regelmäßig eine Relativbewegung zwischen Werkzeug und Werkstück umfasst, ragen regelmäßig bewegliche Maschinenteile durch derartige Abdeckungen hindurch. Dies erfordert Lösungen wie die in der DE 10 2016 117 417 A1 beschriebene Abdeckung.

Derartige Abdeckungen basieren beispielsweise auf mehreren Paaren einander zugewandter Faltenbälge, Teleskopbleche oder dergleichen, die gemeinsam zwischen sich eine bewegliche Öffnung definieren. Diese Öffnung folgt der Bewegung des beweglichen Maschinenteils, das die Öffnung durchragt. Dies umfasst regelmäßig gegenläufige Bewegungen einander zugewandter Faltenbälge eines Paares. Eine solche Lösung beansprucht einen gewissen Bauraum. Ferner müssen die Faltenbälge durch die beweglichen Maschinenteile selbst mit bewegt werden. Dies führt grundsätzlich zu Nachteilen bei der Dynamik. Es hat sich gezeigt, dass derartige Abdeckungen für kompakt gestaltete Werkzeugmaschinen nicht ohne weiteres realisierbar sind.

Vor diesem Hintergrund liegt der vorliegenden Offenbarung die Aufgabe zugrunde, eine Schutzabdeckung für eine Werkzeugmaschine anzugeben, die sich insbesondere für kompakt gestaltete Werkzeugmaschinen und idealerweise auch für andere Werkzeugmaschinen eignet. Vorzugsweise erlaubt die Schutzabdeckung die Reduzierung der Anzahl der beteiligten Komponenten für die Abdeckung. Vorzugsweise hat die Schutzabdeckung nur minimale Auswirkungen auf die Dynamik der Werkzeugmaschine. Vorzugsweise kann die Schutzabdeckung zur Reduzierung des Ressourcenverbrauchs der Werkzeugmaschine beitragen. Insbesondere soll die Schutzabdeckung einen wirksamen Schutz von rückwärtigen Komponenten der Maschinenkinematik vor Partikeln, Fluiden und sonstigen Fremdkörpern ermöglichen, die im Arbeitsraum der Werkzeugmaschine entstehen oder vorhanden sind. Insbesondere soll die Schutzabdeckung wartungsfreundlich und reparaturfreundlich gestaltet sein. Ferner soll die Schutzabdeckung bei vertretbarer Lebensdauer mit geringen Kosten realisierbar sein.

Gemäß einem ersten Aspekt bezieht sich die vorliegende Offenbarung auf eine Werkzeugmaschine, insbesondere kompakt gestaltete Werkzeugmaschine, mit:
- einem Gestell,
- einer Werkzeugspindel mit einem Werkzeughalter,
- einer Werkstückaufnahme, und
- einem Schutzbalg,
   wobei die Werkzeugspindel und die Werkstückaufnahme in einem Arbeitsraum relativ zueinander in zumindest zwei translatorischen Achsen verfahrbar sind,
   wobei der Arbeitsraum durch zumindest eine Trennwand begrenzt ist, die zumindest eine Bewegungsöffnung und, benachbart zur Bewegungsöffnung, einen Mon-tagekragen aufweist, der die Bewegungsöffnung zumindest abschnittsweise umgibt,
   wobei zumindest die Werkzeugspindel oder die Werkstückaufnahme durch die Bewegungsöffnung hindurch mit dem Gestell gekoppelt ist,
   wobei der Schutzbalg einen an den Montagekragen angepassten Montagerand aufweist, der mit einem Zugstrang versehen ist, und
   wobei der Schutzbalg in einem entspannten Zustand des Zugstrangs am Montagekragen montierbar und in einem gespannten Zustand des Zugstrangs am Montagekragen gesichert ist.

Auf diese Weise wird eine Schutzabdeckung bereitgestellt, die eine hinter dem Arbeitsraum angeordnete Maschinenkinematik hinreichend vom Arbeitsraum abschirmt. Gleichwohl bleibt die Dynamik der Werkzeugmaschine gewahrt. Komponenten der Werkzeugmaschine können die Schutzabdeckung durchragen und bei der Bearbeitung bewegt werden, da der Schutzbalg diese Bewegungen nachvollziehen kann. Die Schutzabdeckung umfasst beispielsweise die Trennwand und den Schutzbalg, der am Montagekragen der Trennwand befestigt ist. In einer beispielhaften Ausgestaltung ist der Schutzbalg ein Schutzbalg auf Gewebebasis. Mit anderen Worten umfasst der Schutzbalg ein Gewebe oder einen Stoff.

Der Schutzbalg kann einfach am Montagekragen befestigt bzw. im Fall der Fälle von diesem gelöst werden. Auf diese Weise ist der Schutzbalg sehr wartungsfreundlich gestaltet. Der Schutzbalg kann als kostengünstiges Verschleißteil gestaltet sein und im Fall der Fälle einfach ausgetauscht werden.

Die Bewegung des Schutzbalgs bei der Bewegung der Werkzeugspindel und/oder der Werkstückaufnahme erfordert geringe Kräfte, so dass die Dynamik der Werkzeugmaschine nicht leidet. Dies hat auch positive Auswirkungen auf den Energieverbrauch. Gerade im Vergleich zu konventionellen Teleskopblechen oder Faltenbalg-Lösungen ergeben sich hier deutliche Unterschiede. Dies gilt auch für den vom Schutzbalg beanspruchten Bauraum. Der Schutzbalg ist nicht zwingend auf eine gerade Führungsebene angewiesen. Auch in dieser Hinsicht erhöht sich die gestalterische Freiheit.

Der Schutzbalg ist in einer beispielhaften Ausgestaltung hinreichend elastisch gestaltet, um der Bewegung der Werkzeugspindel und/oder der Werkstückaufnahme zu folgen. In einer weiteren beispielhaften Ausgestaltung ist der Schutzbalg ähnlich einem Schaltsack eines Schalthebels gestaltet, erlaubt also auch ohne wesentliche Dehnung die gegebenenfalls erforderlichen Relativbewegungen zwischen der Werkzeugspindel und der Werkstückaufnahme.

Zur Erzeugung der Relativbewegung zwischen der Werkzeugspindel und der Werkstückaufnahme ist eine Kinematik vorgesehen, beispielsweise eine Dreiachskinematik, Vierachskinematik oder Fünfachskinematik. Beispielhaft umfasst die Kine-matik drei translatorische Achsen, die jeweils orthogonal aufeinander stehen und bedarfsweise eine oder zwei Schwenkachsen. Die Kinematik erstreckt sich zumindest teilweise durch die Bewegungsöffnung hindurch. Die Kinematik erstreckt sich demgemäß auch zumindest teilweise durch den Schutzbalg hindurch, insbesondere durch geeignete Öffnungen im Schutzbalg. Vom Arbeitsraum her betrachtet ist zumindest der Werkzeughalter bzw. ein daran aufgenommenes Bearbeitungswerkzeug der Werkzeugspindel oder ein von der Werkstückaufnahme getragenes Werkstück vor dem Schutzbalg angeordnet.

Die Bewegungsöffnung in der Trennwand stellt den erforderlichen Freiraum für die Relativbewegungen zwischen Werkzeugspindel und Werkstückaufnahme bereit. Der Montagekragen ist beispielhaft als in Richtung auf den Arbeitsraum vorspringender Montagekragen gestaltet.

In einer beispielhaften Ausgestaltung ist ein einziger Schutzbalg vorgesehen, obwohl die Relativbewegung zwischen der Werkzeugspindel und der Werkstückaufnahme zumindest zwei translatorische Achsen, insbesondere drei translatorische Achsen, umfassen. Es ist also nicht erforderlich, zwei oder mehr Schutzbälge vorzusehen, um mehrere Bewegungsachsen durch den Schutzbalg hindurch zu ermöglichen. Beispielhaft umfasst die Relativbewegung zwischen der Werkzeugspindel und der Werkstückaufnahme eine Bewegung entlang einer X-Achse und einer Z-Achse, die im Wesentlichen parallel zur Fläche der Bewegungsöffnung in der Trennwand erfolgt. Beispielhaft umfasst die Relativbewegung zwischen der Werkzeugspindel und der Werkstückaufnahme eine Bewegung entlang einer Y-Achse, die im Wesentlichen senkrecht zur Fläche der Bewegungsöffnung in der Trennwand erfolgt.

In beispielhaften Ausgestaltungen handelt es sich bei der Werkzeugmaschine um eine kompakt gestaltete Werkzeugmaschine mit einem Arbeitsvolumen, das kleiner als 250 mm x 250 mm x 250 mm ist. In beispielhaften Ausgestaltungen ist das Arbeitsvolumen der Werkzeugmaschine kleiner als 200 mm x 200 mm x 200 mm. In beispielhaften Ausgestaltungen ist das Arbeitsvolumen der Werkzeugmaschine kleiner als 150 mm x 150 mm x 150 mm. In beispielhaften Ausgestaltungen ist das Arbeitsvolumen der Werkzeugmaschine kleiner als 100 mm x 100 mm x 100 mm. In beispielhaften Ausgestaltungen ist das Arbeitsvolumen der Werkzeugmaschine kleiner als 75 mm x 75 mm x 75 mm. In beispielhaften Ausgestaltungen ist das Arbeitsvolumen der Werkzeugmaschine etwa 50 mm x 50 mm x 50 mm groß. Diese Angaben betreffen insbesondere die möglichen Vorschübe (Verfahrwege) entlang der X, Y sowie der Z-Achse. Das Arbeitsvolumen kann würfelförmig gestaltet sein. Es sind jedoch auch quaderförmige Bauräume denkbar, deren Verfahrwege in X, Y sowie Z nicht einheitlich sind.

Der Werkzeughalter ist in einer beispielhaften Ausgestaltung zur Aufnahme eines rotatorisch antreibbaren Werkzeugs ausgebildet, insbesondere zur Fräsbearbeitung oder Bohrbearbeitung, also zur spanabhebenden Bearbeitung. Die Bezeich-nung Werkzeugspindel wird stellvertretend für eine Werkzeughalter-Baugruppe verwendet, zumindest in beispielhaften Ausgestaltungen. Die Bezeichnung Werkstückaufnahme wird stellvertretend für eine Werkstückaufnahme-Baugruppe verwendet, zumindest in beispielhaften Ausgestaltungen.

Gemäß einer beispielhaften Ausgestaltung weist die Bewegungsöffnung der Trennwand einen gekrümmten Rand auf, wobei die Bewegungsöffnung insbesondere eine sich dreidimensional erstreckende Öffnungsfläche definiert. Die Bewegungsöffnung umfasst beispielhaft eine gekrümmte Öffnungsfläche. Der Schutzbalg erlaubt auch hier eine größere gestalterische Freiheit als konventionelle Lösungen mit Faltenbälgen. Dies ist insbesondere bei kompakt gestalteten Werkzeugmaschinen von Vorteil.

Gemäß einer weiteren beispielhaften Ausgestaltung ist der Schutzbalg ein Stoffbalg, wobei der Schutzbalg insbesondere eine flüssigkeitsabweisende und dichtende Imprägnierung oder Beschichtung umfasst. Auf diese Weise kann der Schutzbalg das Durchdringen von Kühlschmiermittel, Spänen, Abrieb und ähnlichen Stoffen wirksam verhindern oder zumindest minimieren. In einer beispielhaften Ausgestaltung ist der Schutzbalg als elastischer Stoffbalg auf Basis eines beschichteten Gewebes aus Kunstfasern gestaltet.

Gemäß einer weiteren beispielhaften Ausgestaltung weist der Montagekragen einen Grund auf, an den sich zumindest abschnittsweise eine von der Bewegungsöffnung versetzte Stirn anschließt, die als formschlüssige Lagesicherung dient, wenn der Zugstrang gespannt ist. In einer beispielhaften Ausgestaltung liegt der Zugstrang im gespannten Zustand am Grund des Montagekragens auf. Somit kann der Schutzbalg nicht über die Stirn hinaus vom Montagekragen abgezogen werden.

In einer beispielhaften Ausgestaltung ist der Grund etwa senkrecht zur Öffnungsfläche orientiert, wobei die Stirn etwa senkrecht zum Grund des Montagekragens bzw. parallel zur Öffnungsfläche orientiert ist. Die Stirn des Montagekragens ist von der Trennwand in Richtung auf den Arbeitsraum versetzt.

Gemäß einer weiteren beispielhaften Ausgestaltung ist der Schutzbalg ferner durch ein Klemmprofil am Montagekragen gesichert. Mit anderen Worten kann der Schutzbalg neben der Lagesicherung durch den Zugstrang auch durch ein Klemmprofil am Montagekragen fixiert sein. Dies kann dazu beitragen, einen Verschleiß des Schutzbalges am Montagekragen aufgrund von Relativbewegungen zwischen der Werkzeugspindel und der Werkstückaufnahme zu reduzieren.

Gemäß einer weiteren beispielhaften Ausgestaltung stütz sich das Klemmprofil an der Stirn ab, wobei das Klemmprofil die Stirn insbesondere mit zwei Schenkeln umgibt. Das Klemmprofil weist beispielsweise einen etwa U-förmigen Querschnitt mit einer Basis und zwei Schenkeln auf. Die Schenkel des Klemmprofils können den Schutzbalg an der Stirn des Montagekragens kraftschlüssig und/oder formschlüssig sichern. Es ist vorstellbar, Sicherungselemente in Form von Widerhaken und ähnlichem an zumindest einem der Schenkel vorzusehen. Es ist jedoch auch vorstellbar, auf derartige Sicherungselemente zu verzichten und den Schutzbalg kraftschlüssig/reibschlüssig am Montagekragen festzulegen.

Das Klemmprofil mit dem U-Querschnitt kann mit seinen beiden Schenkeln die Stirn des Montagekragens zwischen sich einklemmen. Es ist jedoch auch vorstellbar, das Klemmprofil derart zu gestalten, dass seine Basis dem Grund des Montagekragens zugewandt ist, wobei sich ein erster Schenkel an der Stirn und ein zweiter Schenkel an der Trennwand abstützt. Auch auf diese Weise kann das Klemmprofil den Schutzbalg zusätzlich zum Zugstrang am Montagekragen sichern. Es ist grundsätzlich auch ein kombiniertes Klemmprofil denkbar, dass im Querschnitt zwei einander entgegengerichtete U-Profile, die an einem gemeinsamen Schenkel einander verbunden sind. Auf diese Weise kann sowohl an der Stirn als auch zwischen der Stirn und der Trennwand eine Klemmung erfolgen.

Das Klemmprofil kann auch als Lagesicherungsprofil bezeichnet werden. In einer beispielhaften Ausgestaltung ist das Klemmprofil ähnlich einem Kantenschutzprofil ausgebildet. Das Klemmprofil kann den Schutzbalg großflächig gegen die Stirn des Montagekragens drücken. Es hat sich gezeigt, dass dies zur Reduzierung des Verschleißes des Montagekragens beiträgt. Das Klemmprofil kann Scherbewegungen des Schutzbalgs in unmittelbarer Nachbarschaft zu etwaigen Kanten des Montagekragens minimieren.

Das Klemmprofil ist beispielhaft aus einem Elastomer, einem thermoplastischen Werkstoff und/oder einem Metallwerkstoff gestaltet. Auch Verbundwerkstoffe sind vorstellbar, beispielsweise verstärkte Elastomere oder thermoplastische Werkstoffe, wobei die Verstärkung durch Fasern oder Metallwerkstoffe erfolgen kann.

Gemäß einer weiteren beispielhaften Ausgestaltung ist die Werkzeugspindel mittelbar oder unmittelbar am Gestell translatorisch verfahrbar. Gemäß einer weiteren beispielhaften Ausgestaltung ist die Werkstückaufnahme mittelbar oder unmittelbar am Gestell translatorisch verfahrbar. Mit anderen Worten kann also die kinematische Kette für die Werkzeugspindel bzw. die Werkstückaufnahme die Bewegungsöffnung und somit auch den Schutzbalg durchragen.

Gemäß einer weiteren beispielhaften Ausgestaltung ist der Schutzbalg ringförmig oder achtförmig gestaltet, wobei der Zugstrang am Montagerand des Schutzbalgs angeordnet ist. Am Montagerand des Schutzbalgs ist beispielhaft ein Umschlag (Doppelung) vorgesehen, der eine Führung für den Zugstrang bereitstellt. Die näherungsweise ringförmige oder achtförmige Gestaltung erlaubt es, den Montagerand am Außenumfang vorzusehen. In einem Binnenbereich ist zumindest eine Öffnung vorgesehen. Beispielhaft sind zwei Öffnungen vorgesehen, die der Werkzeugspindel und der Werkstückaufnahme zugeordnet sind.

Gemäß einer weiteren beispielhaften Ausgestaltung weist der Schutzbalg eine Werkzeugöffnung für die Werkzeugspindel auf. Gemäß einer weiteren beispielhaften Ausgestaltung weist der Schutzbalg eine Werkstücköffnung für die Werkstückaufnahme auf. Es versteht sich, dass in beispielhaften Ausgestaltungen sowohl die Werkstücköffnung als auch die Werkzeugöffnung vorgesehen sind.

Gemäß einer weiteren beispielhaften Ausgestaltung weist der Schutzbalg zumindest eine Hilfsöffnung auf. Die Hilfsöffnung ist beispielsweise zur Durchführung von Sensorik (beispielsweise Werkzeugbruch-Erkennung), zur Durchführung einer Führungshilfe für den Schutzbalg, zur Durchführung einer KSS-Leitung oder für ähnliche Zwecke vorgesehen. Es versteht sich, dass auch Schutzbälge ohne Hilfsöffnung vorstellbar sind. Im Falle einer Gestaltung mit zumindest einer Hilfsöffnung ist es vorstellbar, diese verschließbar zu gestalten.

Gemäß einer weiteren beispielhaften Ausgestaltung weist der Schutzbalg eine Mehrzahl von Befestigungsöffnungen auf, insbesondere benachbart zur Werkzeugöffnung und/oder zur Werkstücköffnung, wobei Befestigungselemente die Befestigungsöffnungen durchragen, um den Schutzbalg benachbart zur Werkzeugöffnung und/oder zur Werkstücköffnung zu klemmen.

Mit anderen Worten kann der Schutzbalg auf diese Weise auch bei der Werkzeugspindel und bei der Werkstückaufnahme geklemmt oder anderweitig fixiert sein. Bei den Befestigungselementen handelt es sich beispielsweise um Schrauben oder dergleichen. Auf der dem Arbeitsraum zugewandten Seite sind beispielhaft Leisten mit Öffnungen vorgesehen, die an die Befestigungsöffnungen des Schutzbalgs angepasst sind. Auf diese Weise kann eine flächige Klemmung des Schutzbalgs erfolgen.

Gemäß einer weiteren beispielhaften Ausgestaltung ist der Schutzbalg aus einem elastischen Gewebe gebildet, insbesondere einem Gewebe auf Polymerbasis, das zumindest einseitig beschichtet ist. Insbesondere auf seiner dem Arbeitsraum zugewandten Seite kann der Schutzbalg beschichtet sein. Die Beschichtung verringert das Anhaften von Spänen und dergleichen. Die Beschichtung dichtet den Schutzbalg ab, beispielsweise hinreichend staubdicht, flüssigkeitsdicht oder gasdicht.

Beispielhaft besteht der Schutzbalg aus einem Gewebe auf Polyamid-Basis, das zumindest einseitig beschichtet ist. Das Gewebe kann eine geringe spezifische Masse und eine hohe Elastizität aufweisen. Die Beschichtung sorgt für hinreichende Dichtheit. Das Gewebe ist mechanisch hinreichend stabil. Das Gewebe eignet sich für technische Anwendungen. Das Gewebe weist vorzugsweise eine hohe Widerstandsfähigkeit gegen Späne, Abrieb und vergleichbare abrasive Stoffe. Das Gewebe ist in beispielhaften Ausgestaltungen in hohem Maße staubdicht. In einer beispielhaften Ausgestaltung ist das Gewebe im Bereich etwaiger Nähte (etwa zur Ausbildung des Umschlags am Montagerand) separat abgedichtet, so dass auch dort Fremdstoffe weitgehend am Eindringen gehindert werden.

Gemäß einer weiteren beispielhaften Ausgestaltung ist der Schutzbalg vor der Montage am Montagekragen ein im Wesentlichen flächenförmiges Gebilde, wobei der Montagerand einen Binnenbereich des flächenförmigen Gebildes umgibt, und wobei zumindest eine Werkzeugöffnung oder eine Werkstücköffnung im Binnenbereich des flächenförmigen Gebildes angeordnet ist. Das Gewebe, das die Basis für den Schutzbalg bildet, ist in beispielhaften Ausgestaltungen hinreichend elastisch, so dass der Schutzbalg an die gegebene Gestalt der Bewegungsöffnung sowie etwaige Positionen der Werkzeugspindel und der Werkstückaufnahme anpassbar ist.

Gemäß einer weiteren beispielhaften Ausgestaltung ist der Werkstücköffnung im Arbeitsraum ein Schild benachbart, der gemeinsam mit der Werkstückaufnahme entlang zumindest einer translatorischen Achse verfahrbar ist, wobei der Schild als zusätzlicher Späneschutz zwischen der Werkstückaufnahme und dem Schutzbalg angeordnet ist. Auf diese Weise kann die Lebensdauer des Schutzbalgs weiter erhöht werden. Der Schild kann auch als Späneschild bezeichnet werden.

Der Schild ist beispielsweise als flacher Schild aus Blech gestaltet, der parallel zur Öffnungsfläche der Bewegungsöffnung orientiert ist. Der Schild ist vorzugsweise einem Bereich des Schutzbalgs zugeordnet, in dem bei der Bearbeitung mit einem erhöhten Späneeintrag gerechnet wird. Der Schild weist also eine bestimmte Relativposition gegenüber der Werkzeugaufnahme bzw. dem Bearbeitungswerkzeug auf.

Gemäß einer weiteren beispielhaften Ausgestaltung ist der Zugstrang ein Zugband, das den Schutzbalg am Montagekragen sichert. Der Zugstrang ist hinreichend zugfest, so dass die zur Befestigung des Schutzbalgs am Montagekragen erforderlichen Kräfte aufgebracht werden können. Der Zugstrang kann in seinem gespannten Zustand gesichert werden, so dass der Schutzbalg fest am Montagekragen sitzt.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine;
- Fig. 2:: eine weitere perspektivische Ansicht der Werkzeugmaschine gemäß Fig. 1, wobei eine Schutzabdeckung für den Arbeitsraum gezeigt ist;
- Fig. 3:: eine frontale Teilansicht der Werkzeugmaschine gemäß Fig. 2;
- Fig. 4:: eine frontale Ansicht eines Schutzbalges für eine Schutzabdeckung einer Werkzeugmaschine;
- Fig. 5:: eine seitliche Teilansicht auf Basis der Anordnung gemäß Fig. 2;
- Fig. 6:: eine seitliche, geschnittene Teilansicht eines Montagekragens mit montiertem Schutzbalg;
- Fig. 7:: eine weitere seitliche, geschnittene Teilansicht eines Montagekragens mit montiertem Schutzbalg; und
- Fig. 8:: eine weitere seitliche, geschnittene Teilansicht eines Montagekragens mit montiertem Schutzbalg.

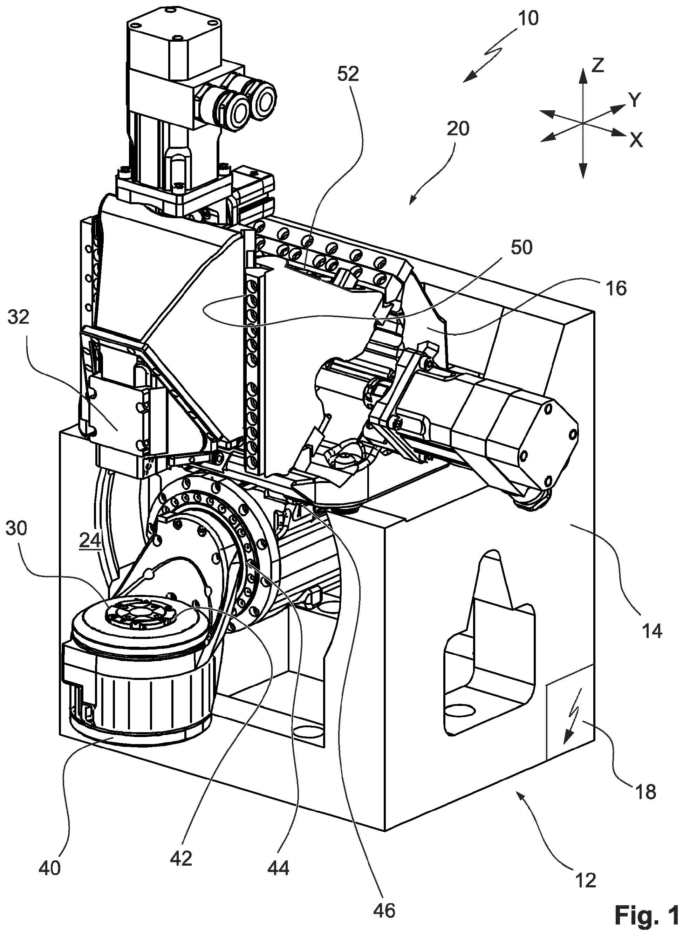

Fig. 1 veranschaulicht anhand einer perspektivischen Darstellung eine beispielhafte Ausgestaltung einer kompakt gestalteten Werkzeugmaschine 10, die sich zur Herstellung feinmechanischer Bauteile eignet. Die Werkzeugmaschine 10 umfasst ein Gestell 12, das im Ausführungsbeispiel eine Untergestell 14 umfasst, auf dem ein Gestellblock 16 gelagert ist. Wesentliche Kräfte, die bei der Bearbeitung entstehen, werden vom Gestellblock 16 aufgenommen. Das Untergestell 14 dient als Auflage für den Gestellblock 16. In Fig. 1 ist ferner mit 18 eine Steuereinrichtung der Werkzeugmaschine 10 angedeutet. Die Steuereinrichtung 18 steuert Komponenten und Funktionen der Werkzeugmaschine 10, um Werkstücke in der gewünschten Weise zu bearbeiten. Auch eine Steuerung über externe Einrichtungen ist vorstellbar.

Die Werkzeugmaschine 10 umfasst ferner eine Kinematik 20, ein die als Mehrachs-Kinematik gestaltet ist. In zumindest einigen der Figuren ist aus Veranschaulichungsgründen ein kartesisches Koordinatensystem X-Y-Z angezeigt. Das Koordinatensystem X-Y-Z umfasst eine X-Achse (Seitenrichtung), eine Y-Achse (Tiefenrichtung), und eine Z-Richtung (Höhenrichtung). Die X-Achse und die Y-Achse sind im Ausführungsbeispiel horizontale Achsen. Die Z-Achse ist im Ausführungsbeispiel eine vertikale Achse. Die Achsen X-Y-Z stehen orthogonal aufeinander. Das Koordinatensystem X-Y-Z dient in erster Linie zur Veranschaulichung und Beschreibung von Komponenten und Funktionen der Werkzeugmaschine 10. Es versteht sich, dass zu diesen Zwecken auch andere Koordinatensysteme verwendbar sind. Das Koordinatensystem X-Y-Z ist daher nicht einschränkend zu verstehen. Der Fachmann kann die erforderlichen gedanklichen Schritte zur Überführung in andere Koordinatensysteme ohne weiteres durchführen.

Die Kinematik 20 umfasst im Ausführungsbeispiel verschiedene Bauteile, die mittelbar oder unmittelbar am Gestellblock 16 gelagert sind. Dies sorgt für kurze Kraftwege und eine hohe Steifigkeit. In Fig. 1 ist ferner mit 24 ein Arbeitsraum angedeutet, in dem die Bearbeitung mit der Werkzeugmaschine 10 stattfindet.

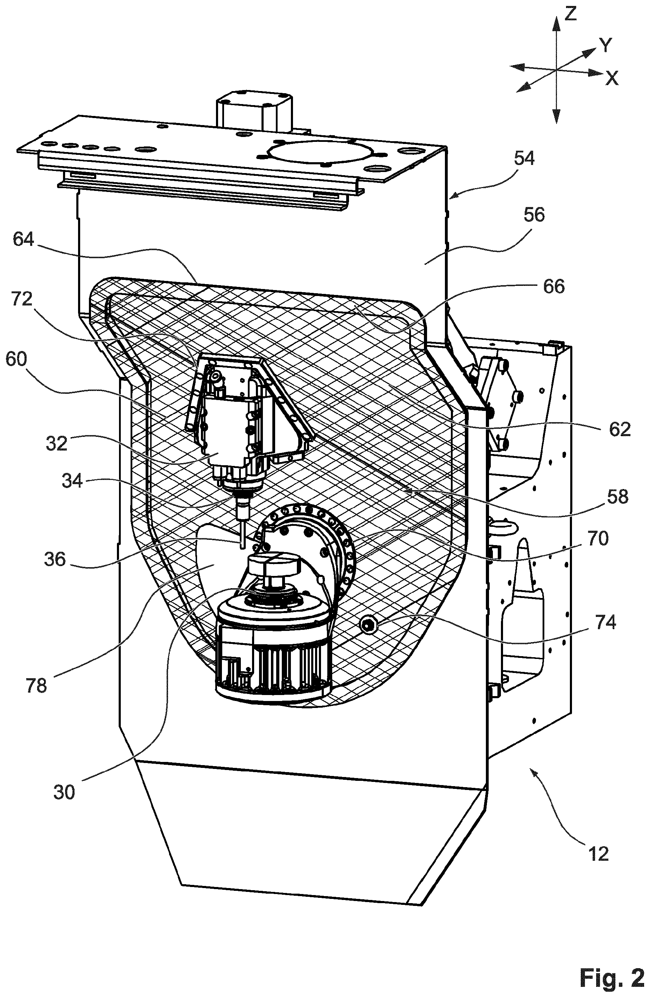

Die Werkzeugmaschine 10 umfasst ferner eine Werkstückaufnahme 30 zur Aufnahme zumindest eines zu bearbeitenden Werkstücks. Ferner ist eine Werkzeugspindel 32 vorgesehen. Der ergänzenden Darstellung in Fig. 2 ist entnehmbar, dass die Werkzeugspindel 32 einen Werkzeughalter 34 umfasst, der zur Aufnahme eines Werkzeugs 36 ausgebildet ist. Das Werkzeug 36 ist rotatorisch antreibbar, um ein von der Werkstückaufnahme 30 gehaltenes Werkstück zu bearbeiten.

Die Werkstückaufnahme 30 sitzt im Ausführungsbeispiel auf einem einseitig geführten Ausleger 40, der einen Schwenkantrieb oder Drehantrieb 42 für die Werkstückaufnahme 30 beherbergt. Die auf diese Weise bereitgestellte rotatorische Achse kann auch als C-Achse bezeichnet werden. Der Ausleger 40 ist über einen weiteren Schwenkantrieb 44 mit einem Linearantrieb 46 gekoppelt, der wiederum am Gestellblock 16 gelagert ist. Der Schwenkantrieb 44 stellt eine rotatorische Achse bereit, die als B-Achse bezeichnet werden kann. Der Linearantrieb 46 stellt eine translatorische Achse bereit, die als Y-Achse bezeichnet werden kann.

Die Werkzeugspindel 32 ist über einen Linearantrieb 50 und eine Linearantrieb 52 mit dem Gestellblock 16 gekoppelt. Der Linearantrieb 50 stellt eine translatorische Achse bereit, die auch als Z-Achse bezeichnet werden kann. Der Linearantrieb 52 stellt eine translatorische Achse bereit, die auch als X-Achse bezeichnet werden kann. Die beiden Linearantriebe 50, 52 bilden einen Kreuzschlittenantrieb. Im Ausführungsbeispiel sind zwei translatorische Achsen (X, Z) der Werkzeugspindel 32 bzw. dem Werkzeug zugeordnet. Eine translatorische Achse (Y) ist der Werkstückaufnahme 30 bzw. dem Werkstück zugeordnet. Ferner sind im Ausführungsbeispiel zwei rotatorische Achsen/Schwenkachsen (B, C) der Werkstückaufnahme 30 bzw. dem Werkstück zugeordnet. Andere Arten der Zuordnung sind denkbar und vom Konzept der Maschinenkinematik abhängig.

Insgesamt stellt die Werkzeugmaschine einen 10 kompakten Arbeitsraum 24 bereit. Dies führt wiederum zu einer geringen Baugröße der Werkzeugmaschine 10, verbunden mit geringem Gewicht und geringem Energiebedarf. Gleichwohl kann aufgrund der konstruktiv vorgegebenen Steifigkeit eine hohe Präzision und eine hohe Abtragsleistung gewährleistet werden.

Fig. 2 veranschaulicht die Werkzeugmaschine 10 anhand einer weiteren perspektivischen Darstellung. In Fig. 2 ist ergänzend zur Darstellung gemäß Fig. 1 eine Schutzabdeckung 54 dargestellt, die den Arbeitsraum 24 begrenzt. Die Schutzabdeckung 54 ist zwischen dem Gestellblock 16 und dem Arbeitsraum 24 angeordnet.

Im Ausführungsbeispiel umfasst die Schutzabdeckung 54 eine Trennwand 56 und einen Schutzbalg 58, der an der Trennwand 56 befestigt ist. Die Trennwand 56 besteht beispielsweise aus Blech. Die Trennwand 56 umfasst eine Bewegungsöffnung 62, die eine Öffnungsfläche 60 definiert. Verschiedene Komponenten der Werkzeugmaschine 10 erstrecken sich durch Bewegungsöffnung 62. Im Ausführungsbeispiel gemäß Fig. 2 ist die Werkzeugspindel 32 zumindest teilweise im Arbeitsraum 24 angeordnet. Gleichermaßen ist die Werkstückaufnahme 30 zumindest teilweise im Arbeitsraum 24 angeordnet. Die Werkzeugspindel 32 ist mittelbar am Gestellblock 16 gelagert. Die Werkstückaufnahme 30 ist mittelbar am Gestellblock 16 gelagert. Folglich erstrecken sich Kom-ponenten der jeweiligen kinematischen Kette durch die Bewegungsöffnung 62 und damit durch den Schutzbalg 58 hindurch.

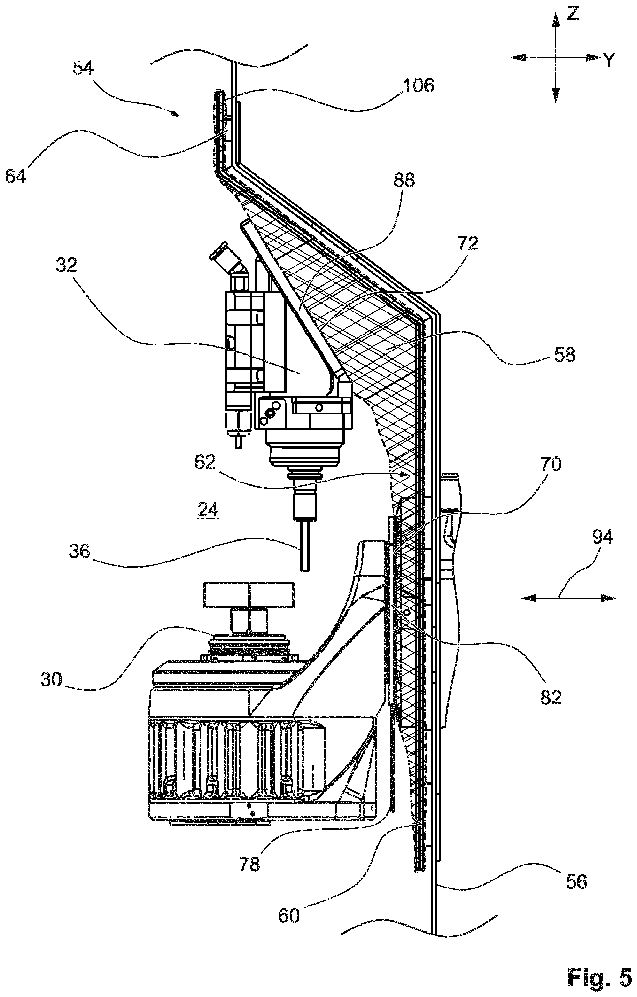

Die Schutzabdeckung 54 umfasst ferner einen Montagekragen 64, der die Bewegungsöffnung 62 zumindest abschnittsweise umgibt. Im Ausführungsbeispiel gemäß Fig. 2 umgibt der Montagekragen 64 die Bewegungsöffnung 62 vollständig. Der Montagekragen 64 sitzt an einem die Bewegungsöffnung 62 umgebenden Rand 66 der Trennwand 56. Fig. 2 (sowie Fig. 5) ist entnehmbar, dass die Trennwand 56 im Ausführungsbeispiel nicht vollständig eben/planar verläuft. Die gezeigte Trennwand 56 weist beispielsweise zueinander versetzte vertikale Abschnitte auf, die über einen geneigten Abschnitt miteinander verbunden sind. Auch die Bewegungsöffnung 62 und folglich die sich ergebende Öffnungsfläche 60 sind entsprechend gestaltet. Der Schutzbalg 58 sitzt am Montagekragen 64. Der Schutzbalg 58 ist hinreichend elastisch, so dass auch eine gekrümmte Bewegungsöffnung 62 durch den Schutzbalg 58 verschlossen werden kann.

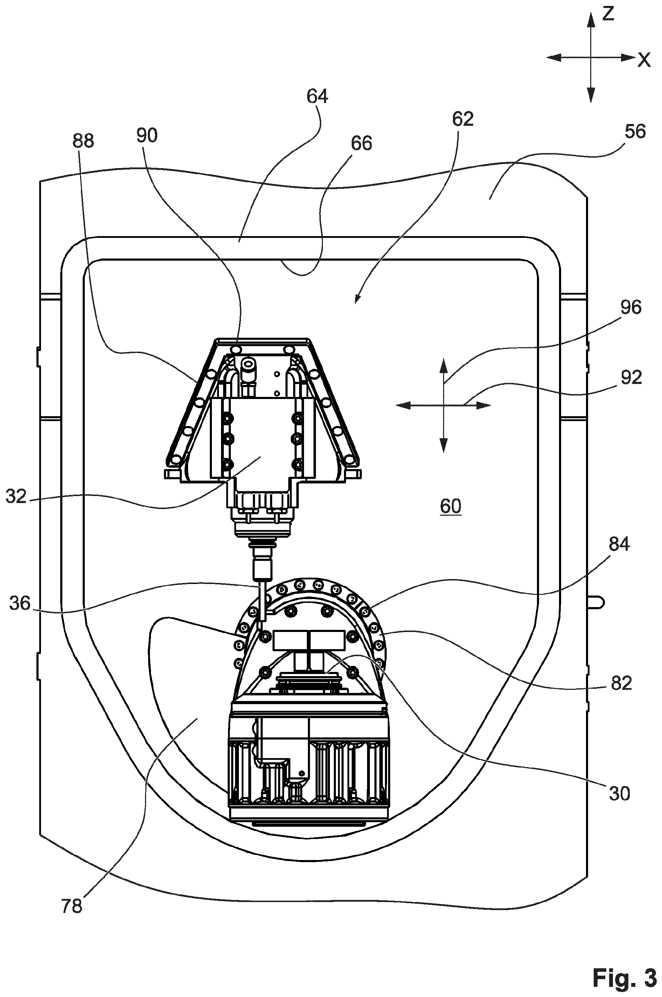

In Fig. 2 ist ferner angedeutet, dass der Schutzbalg 58 eine Werkstücköffnung 70 für die Werkstückaufnahme 30 sowie eine Werkzeugöffnung 72 für die Werkzeugspindel 32 aufweist. Ferner ist beispielhaft eine mit 74 bezeichnete Hilfsöffnung vorgesehen, durch die weitere Komponenten in den Arbeitsraum 24 hineingeführt werden können. Den Figuren 2 und 3 ist ferner entnehmbar, dass der Werkstückaufnahme 30 ein Schild 78 zugeordnet ist, der als Späneschutz zwischen dem Schutzbalg 58 und dem Arbeitsraum 24 angeordnet ist, vergleiche hierzu auch Fig. 5. Der Schild 78 sitzt am Line-arantrieb 46 (Fig. 1), beispielsweise an einer dem Arbeitsraum zugewandten Stirn des Linearantriebs 46.

Der Schild 78 ist derart dimensioniert und positioniert, dass zumindest eine Teilmenge der bei der Bearbeitung entstehenden Späne (Gemisch aus Spänen, Kühlschmierstoffen, Abrieb und ähnlichem) vor einem Auftreffen auf den Schutzbalg 58 aufgefangen werden kann. Im Ausführungsbeispiel gemäß den Figuren 2, 3 und 5 ist der Schild 78 derart angeordnet, dass sich die Ist-Position des Schildes 78 nicht ändert, wenn die Werkstückaufnahme 30 durch den Schwenkantrieb 44 um die B-Achse verschwenkt wird.

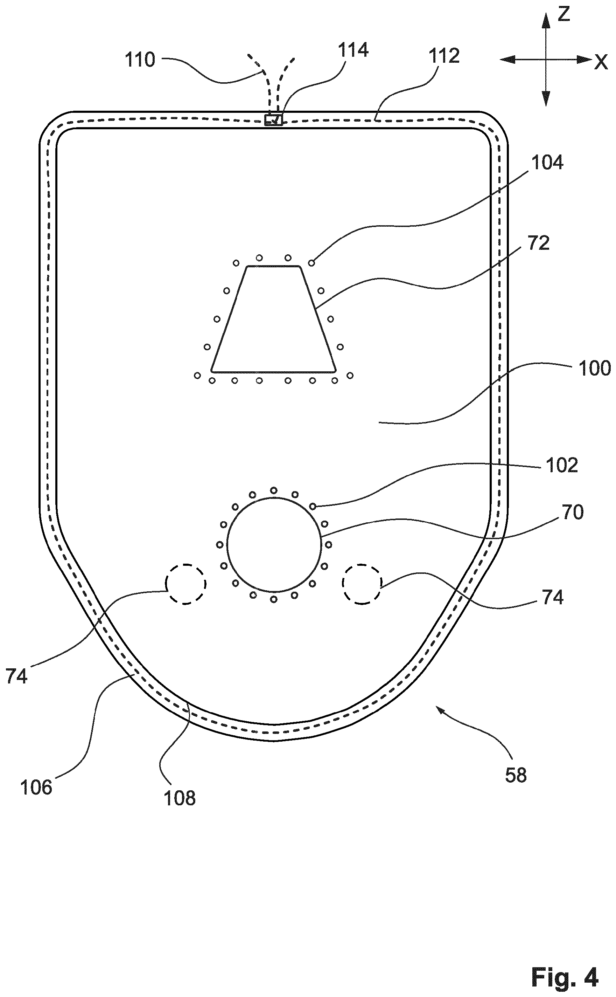

Fig. 3 zeigt eine frontale Ansicht auf die Bewegungsöffnung 62, vom Arbeitsraum 24 her. Komponenten der Werkzeugmaschine 10, die hinter der Bewegungsöffnung 62 bzw. der durch diese definierten Öffnungsfläche 60 liegen, sind im Fig. 3 nicht gezeigt. Fig. 4 veranschaulicht einen Schutzbalg 58, der zur Abdeckung der Bewegungsöffnung 62 verwendbar ist, in einem nicht montierten Zustand. Der Schutzbalg 58 ist mit verschiedenen Öffnungen versehen, vergleiche die Werkstücköffnung 70, die Werkzeugöffnung 72 sowie zwei (optionale) Hilfsöffnungen 74. Die Öffnungen 70, 72 und bedarfsweise die Öffnungen 74 sind in einem Binnenbereich 100 des Schutzbalgs 58 angeordnet.

Im montierten Zustand durchragt die Werkstückaufnahme 30 die Werkstücköffnung 70. Gleichermaßen durchragt die Werkzeugspindel 32 die Werkzeugöffnung 72. Im Ausführungsbeispiel ist der Schutzbalg 58 sowohl bei der Werkstücköffnung 70 als auch bei der Werkzeugöffnung 72 an beweglichen Komponenten der Werkzeugmaschine 10, die die Bewegungsöffnung 62 durchragen, festgelegt. Der Werkstückaufnahme 30 ist zumindest ein Klemmsegment 82 zugeordnet, durch das sich Befestigungselemente 84 erstrecken. Beispielhaft sind zwei Klemmensegmente 82 vorgesehen, die jeweils einen Ringabschnitt von 180° abdecken. Fig. 4 zeigt korrespondierende Befestigungsöffnungen 102 im Binnenbereich 100, die um die Werkstücköffnung 70 verteilt sind.

Der Werkzeugspindel 32 ist zumindest ein Klemmsegment 88 zugeordnet, durch das sich Befestigungselemente 90 erstrecken. Beispielhaft ist das Klemmsegment 88 hufeisenförmig oder U-förmig gestaltet. Es ist vorstellbar, bei der offenen Seite des Klemmsegments 88 ein weiteres Klemmsegment vorzusehen (in Fig. 3 nicht explizit bezeichnet). Fig. 4 zeigt korrespondierende Befestigungsöffnungen 104, die um die Werkzeugöffnung 72 verteilt sind. Bei den Befestigungselementen 84, 90 handelt es sich beispielsweise um Schrauben oder dergleichen. Mit den Klemmsegmenten 82, 88 kann der Schutzbalg 58 formschlüssig und kraftschlüssig an beweglichen Komponenten der Werkzeugmaschine 10 befestigt werden, die die Bewegungsöffnung 62 durchragen.

Im Ausführungsbeispiel gemäß Fig. 4 ist die Werkzeugspindel 32 entlang zweier translatorischer Achsen 92, 96 innerhalb der Bewegungsöffnung 62 entlang der Öffnungsfläche 60 verfahrbar. Dies wird durch die Linearantriebe 50, 52 (vergleiche Fig. 1) bewerkstelligt. Die Achse 92 ist parallel zur X-Achse. Die Achse 96 ist parallel zur Z-Achse. Der Schutzbalg 58 ist hinreichend elastisch, um die erforderlichen Verfahrwege entlang der beiden Achsen 92, 96 nachzuvollziehen. Auf diese Weise kann mit nur einem Schutzbalg 58 eine Abdeckung der Bewegungsöffnung 62 gewährleistet werden, obwohl eine Bewegung in zwei (oder mehr) Achsen 92, 96 stattfinden kann.

Der Schutzbalg 58 ist beispielsweise als Stoffbalg oder Gewebebalg gestaltet. Der Stoff bzw. das Gewebe basiert beispielsweise auf einer Kunstfaser. In beispielhaften Ausgestaltungen ist zumindest einseitig eine Beschichtung vorgesehen. In beispielhaften Ausgestaltungen liegt der Schutzbalg 58 im nicht montierten Zustand als flächenförmiges Gebilde vor. Der in Fig. 4 in flacher Orientierung gezeigte Schutzbalg 58 weist einen Montagerand 106 auf, in dem im Gewebe ein Umschlag 108 vorgesehen ist. Der Umschlag 108 wird beispielsweise durch eine Naht gesichert. Auf diese Weise ergibt sich eine umlaufende Führung für einen Zugstrang 110. Der Zugstrang 110 ist beispielsweise als Zugband 112 ausgebildet. Im Ausführungsbeispiel wird der Zugstrang 110 bei einer Öffnung 114 aus dem Montagerand 106 herausgeführt. Somit kann der Zugstrang 110 gespannt werden, um den Schutzbalg 58 am Montagekragen 64 zu sichern. Es versteht sich, dass der Schutzbalg 58 im montierten Zustand eine von der flachen Darstellung in Fig. 4 abweichende Gestalt aufweisen kann.

Fig. 5 veranschaulicht anhand einer seitlichen Ansicht auf den Arbeitsraum 24 die Gestalt der Schutzabdeckung 54 im montierten Zustand des Schutzbalgs 58. Wie vorstehend bereits dargelegt, ist die Trennwand 56 mit der Bewegungsöffnung 62 und dem umlaufenden Montagekragen 64 im Ausführungsbeispiel nicht vollständig flach gestaltet. Die Werkstückaufnahme 30 und die Werkzeugspindel 32 sind zumindest teilweise im Arbeitsraum 24 angeordnet. Die Werkstückaufnahme 30 und die Werkzeugspindel 32 durchragen den Schutzbalg 58. Vergleiche das Klemmsegment 82 für die Werkstückaufnahme 30 sowie das Klemmsegment 88 für die Werkzeugspindel 32. In Fig. 5 sind die Klemmsegmente 82, 88 von der Öffnungsfläche 60 der Bewegungsöffnung 62 in Richtung auf den Arbeitsraum 24 versetzt. Die Öffnungsfläche 60 ist in Fig. 5 senkrecht zur Ansichtsebene orientiert. Der Schutzbalg 58 ist bei der gezeigten Konstellation zumindest abschnittsweise gekrümmt bzw. gewölbt, insbesondere zur Überbrückung eines etwaigen Versatzes zwischen der Werkstücköffnung 70, der Werkzeugöffnung 72 sowie der Öffnungsfläche 60 der Bewegungsöffnung 62.

Fig. 5 veranschaulicht ferner anhand einer mit 94 bezeichneten Achse, dass im Ausführungsbeispiel die Werkstückaufnahme 30 durch einen Linearantrieb 46 (vergleiche Fig. 1) translatorisch verfahrbar ist. Die Achse 94 ist parallel zur Y-Achse. Folglich kann die Werkstückaufnahme 30 entlang der Achse 94 in Richtung auf den Arbeitsraum 24 eingefahren oder ausgefahren werden. Dies resultiert in einer Änderung einer Wölbung des Schutzbalgs 58 in Nachbarschaft zur Werkstücköffnung 70 (vergleiche Fig. 4). Die Öffnungen 70, 72 im Schutzbalg 58 bewegen sich relativ zum Montagekragen 64 bzw. zum Rand 66 der Trennwand 56, wenn die Werkzeugspindel 32 bzw. die Werkstückaufnahme 30 entlang der diesen zugeordneten Achsen 92, 94, 96 bewegt werden, insbesondere translatorisch entlang zumindest einer der Achsen 92, 94, 96 (X, Y, Z) bewegt werden.

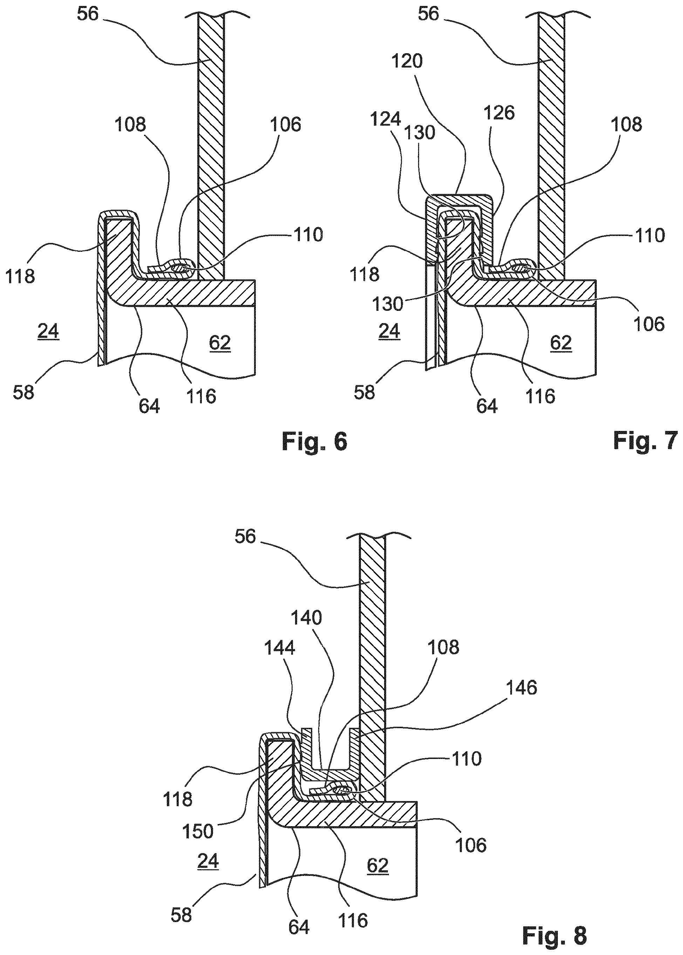

Fig. 5 veranschaulicht, dass der Montagekragen 64 gegenüber der Trennwand 56 in Richtung auf den Arbeitsraum 24 versetzt ist. Der Montagerand 106 des Schutzbalgs 58 ist am Montagekragen 64 gesichert. Die Figuren 6, 7 und 8 veranschaulichen verschiedene Detailgestaltungen dieser Befestigung, wobei jeweils geschnittene Detailansichten durch den Montagekragen 64 mit montiertem Schutzbalg 58 gezeigt sind.

Fig. 6 zeigt, dass der Montagekragen 64 einen Grund 116 und eine Stirn 118 aufweist. Der Grund 116 ist etwa senkrecht zur Trennwand 56 orientiert. Der Montagekragen 64 ist an der Trennwand befestigt, beispielsweise über den Grund 116. An den Grund 116 schließt sich in Richtung auf den Arbeitsraum 24 eine Stirn 118 an. Die Stirn 118 ist gegenüber der Trennwand 56 hin zum Arbeitsraum 24 versetzt. Die Stirn 118 vergrößert den Umfang des Montagekragens 64.

Der Schutzbalg 58 verschließt die Bewegungsöffnung 62. In seinem Randbereich liegt der Schutzbalg 58 an der Stirn 118 an, wobei der Montagerand 106 mit dem Umschlag 108 im Ausführungsbeispiel gemäß Fig. 6 am Grund 118 anliegt. Im Umschlag 108 ist der Zugstrang 110 angeordnet. Wenn der Zugstrang 110 festgezogen wird, ist der Schutzbalg 58 am Montagekragen 64 gesichert. Der Schutzbalg 58 ist dem Montagekragen 64 übergestülpt. Der Schutzbalg 58 kann am Montagekragen 64 festgezurrt werden.

Fig. 7 zeigt, dass der Schutzbalg 58 zusätzlich über ein Klemmprofil 120 am Montagekragen 64 gesichert werden kann. Im Ausführungsbeispiel ist das Klemmprofil 120 etwa U-förmig gestaltet und mit zwei Schenkeln 124, 126 versehen. Das Klemmprofil 120 kann auf die Stirn 118 aufgesteckt werden und sichert so den Schutzbalg 58 an der Stirn 118. Beispielhaft weist das Klemmprofil 120 Sicherungselemente 130 auf, die etwa als Vorsprünge oder Widerhaken gestaltet sind. Auf diese Weise kann das Klemmprofil 120 auf den (hinreichend weichen) Schutzbalg 58 einwirken, um diesen am Montagekragen 64 zusätzlich im Bereich der Stirn 118 zu fixieren. Auf diese Weise lassen sich unerwünschte Scherbewegungen reduzieren. Dies kann zu einem reduzierten Verschleiß und zu erhöhter Lebensdauer führen. Ausgestaltungen des Klemmprofils 120 ohne Sicherungselemente 130 sind vorstellbar.

Fig. 8 veranschaulicht eine abgewandelte Ausgestaltung eines Klemmprofils 140, das zur zusätzlichen Sicherung des Schutzbalgs 58 am Montagekragen 64 nutzbar ist. Das Klemmprofil 140 ist U-förmig gestaltet. Das Klemmprofil 140 ist in Fig. 8 mit seiner Basis dem Grund 116 zugewandt. Ein erster Schenkel 144 des Klemmprofils 140 stützt sich an der Stirn 118 ab. Ein zweiter Schenkel 146 stützt sich an der Trennwand 56 ab. Beispielhaft ist der Schenkel 144 mit Sicherungselementen 150 versehen, etwa mit Vorsprüngen, Nasen oder dergleichen, die dort auf den (hinreichend weichen) Schutzbalg 58 einwirken können. Auch auf diese Weise kann der Schutzbalg 58 zusätzlich am Montagekragen 64 gesichert werden. Ausgestaltungen des Klemmprofils 140 ohne Sicherungselemente 150 sind vorstellbar.

## Patentansprüche

1. Werkzeugmaschine (10), insbesondere kompakt gestaltete Werkzeugmaschine (10), für die Mehrachsbearbeitung, mit
- einem Gestell (12),
- einer Werkzeugspindel (32) mit einem Werkzeughalter (34),
- einer Werkstückaufnahme (30), und
- einem Schutzbalg (58),
wobei die Werkzeugspindel (32) und die Werkstückaufnahme (30) in einem Arbeitsraum (24) relativ zueinander in zumindest zwei translatorischen Achsen (92, 94, 96) verfahrbar sind,
wobei der Arbeitsraum (24) durch zumindest eine Trennwand (56) begrenzt ist, die zumindest eine Bewegungsöffnung (62) und, benachbart zur Bewegungsöffnung (62), einen Montagekragen (64) aufweist, der die Bewegungsöffnung (62) zumindest abschnittsweise umgibt,
wobei zumindest die Werkzeugspindel (32) oder die Werkstückaufnahme (30) durch die Bewegungsöffnung (62) hindurch mit dem Gestell (12) gekoppelt ist, wobei der Schutzbalg (58) einen an den Montagekragen (64) angepassten Montagerand (106) aufweist,
**dadurch gekennzeichnet, dass**
der Montagerand (106) mit einem Zugstrang (110) versehen ist, und
der Schutzbalg (58) in einem entspannten Zustand des Zugstrangs (110) am Montagekragen (64) montierbar und in einem gespannten Zustand des Zugstrangs (110) am Montagekragen (64) gesichert ist.

2. Werkzeugmaschine (10) nach Anspruch 1,
wobei die Bewegungsöffnung (62) der Trennwand (56) einen gekrümmten Rand (66) aufweist.

3. Werkzeugmaschine (10) nach Anspruch 2,
wobei die Bewegungsöffnung (62) eine sich dreidimensional erstreckende Öffnungsfläche (60) definiert.

4. Werkzeugmaschine (10) nach einem der Ansprüche 1-3,
wobei der Schutzbalg (58) ein Stoffbalg ist und insbesondere eine flüssigkeitsabweisende und dichtende Imprägnierung oder Beschichtung umfasst.

5. Werkzeugmaschine (10) nach einem der Ansprüche 1-4,
wobei der Montagekragen (64) einen Grund (116) aufweist, an den sich zumindest abschnittsweise eine von der Bewegungsöffnung (62) versetzte Stirn (118) anschließt, die als formschlüssige Lagesicherung dient, wenn der Zugstrang (110) gespannt ist.

6. Werkzeugmaschine (10) nach einem der Ansprüche 1-5,
wobei der Schutzbalg (58) ferner durch ein Klemmprofil (120, 140) am Montagekragen (64) gesichert ist.

7. Werkzeugmaschine (10) nach den Ansprüchen 5 und 6,
wobei sich das Klemmprofil (120, 140) an der Stirn (118) abstützt, und
wobei das Klemmprofil (120, 140) insbesondere die Stirn (118) mit zwei Schenkeln (124, 126) umgibt.

8. Werkzeugmaschine (10) nach einem der Ansprüche 1-7,
wobei die Werkzeugspindel (32) mittelbar oder unmittelbar am Gestell (12) translatorisch verfahrbar ist, und/oder
wobei die Werkstückaufnahme (30) mittelbar oder unmittelbar am Gestell (12) translatorisch verfahrbar ist.

9. Werkzeugmaschine (10) nach einem der Ansprüche 1-8,
wobei der Schutzbalg (58) ringförmig oder achtförmig gestaltet ist, und
wobei der Zugstrang (110) am Montagerand (106) des Schutzbalgs (58) angeordnet ist, und/oder
wobei der Schutzbalg (58) zumindest eine Hilfsöffnung (74) aufweist.

10. Werkzeugmaschine (10) nach einem der Ansprüche 1-9,
wobei der Schutzbalg (58) eine Werkzeugöffnung (72) für die Werkzeugspindel (32) aufweist, und/oder
wobei der Schutzbalg (58) eine Werkstücköffnung (70) für die Werkstückaufnahme (30) aufweist.

11. Werkzeugmaschine (10) nach einem der Ansprüche 1-10,
wobei der Schutzbalg (58) eine Mehrzahl von Befestigungsöffnungen (102, 104) aufweist, insbesondere benachbart zur Werkzeugöffnung (72) und/oder zur Werkstücköffnung (70), und
wobei Befestigungselemente (84, 90) die Befestigungsöffnungen (102, 104) durchragen, um den Schutzbalg (58) benachbart zur Werkzeugöffnung (72) und/oder zur Werkstücköffnung (70) zu klemmen.

12. Werkzeugmaschine (10) nach einem der Ansprüche 1-11,
wobei der Schutzbalg (58) aus einem elastischen Gewebe gebildet ist, und
wobei das Gewebe insbesondere ein Gewebe auf Polymerbasis ist, das zumindest einseitig beschichtet ist.

13. Werkzeugmaschine (10) nach einem der Ansprüche 1-12,
wobei der Schutzbalg (58) vor der Montage am Montagekragen (64) ein im Wesentlichen flächenförmiges Gebilde ist,
wobei der Montagerand (106) einen Binnenbereich (100) des flächenförmigen Gebildes umgibt, und
wobei zumindest eine Werkzeugöffnung (72) oder eine Werkstücköffnung (70) im Binnenbereich (100) des flächenförmigen Gebildes angeordnet ist.

14. Werkzeugmaschine (10) nach einem der Ansprüche 1-13,
wobei der Werkstücköffnung (70) im Arbeitsraum (24) ein Schild (78) benachbart ist, der gemeinsam mit der Werkstückaufnahme (30) entlang zumindest einer translatorischen Achse (92, 94, 96) verfahrbar ist, und wobei der Schild (78) als zusätzlicher Späneschutz zwischen der Werkstückaufnahme (30) und dem Schutzbalg (58) angeordnet ist.

15. Werkzeugmaschine (10) nach einem der Ansprüche 1-14,
wobei der Zugstrang (110) ein Zugband (112) ist, das den Schutzbalg (58) am Montagekragen (64) sichert.

## Claims

1. Machine tool (10), in particular a machine tool (10) of compact design, for multi-axis machining, comprising:
- a frame (12),
- a tool spindle (32) with a tool holder (34),
- a workpiece holder (30), and
- a protective bellows (58),
wherein the tool spindle (32) and the workpiece holder (30) are movable relative to one another in at least two translatory axes (92, 94, 96) in a working space (24), wherein the working space (24) is delimited by at least one partition wall (56) which has at least one travel opening (62) and, adjacent to the travel opening (62), a mounting collar (64) which surrounds the travel opening (62) at least partially, wherein at least the tool spindle (32) or the workpiece holder (30) is coupled to the frame (12) through the travel opening (62), wherein the protective bellows (58) has a mounting edge (106) adapted to the mounting collar (64),
**characterized in that**
the mounting edge (106) is provided with a tension member (110), and
the protective bellows (58) is mountable on the mounting collar (64) in a relaxed state of the tension member (110) and is secured on the mounting collar (64) in a tensioned state of the tension member (110).

2. Machine tool (10) according to claim 1,
wherein the travel opening (62) of the partition wall (56) has a curved edge (66).

3. Machine tool (10) according to claim 2,
wherein the travel opening (62) defines a three-dimensionally extending opening area (60).

4. Machine tool (10) according to one of claims 1-3,
wherein the protective bellows (58) is a fabric bellows and in particular comprises a liquid-repellent and sealing impregnation or coating.

5. Machine tool (10) according to one of claims 1-4,
wherein the mounting collar (64) has a base (116) which is adjoined, at least partially, by a front face (118) that is offset from the travel opening (62), which serves as a positive positional locking means when the tension member (110) is tensioned.

6. Machine tool (10) according to one of claims 1-5,
wherein the protective bellows (58) is further secured to the mounting collar (64) by a clamping profile (120, 140).

7. Machine tool (10) according to claims 5 and 6,
wherein the clamping profile (120, 140) is supported on the front face (118), and wherein the clamping profile (120, 140) in particular encloses the front face (118) with two legs (124, 126).

8. Machine tool (10) according to one of claims 1-7,
wherein the tool spindle (32) is movable in translation directly or indirectly on the frame (12), and/or
wherein the workpiece holder (30) is movable in translation directly or indirectly on the frame (12).

9. Machine tool (10) according to one of claims 1-8,
wherein the protective bellows (58) is annular or in the shape of a figure eight, and wherein the tension member (110) is arranged on the mounting edge (106) of the protective bellows (58), and/or wherein the protective bellows (58) has at least one auxiliary opening (74).

10. Machine tool (10) according to one of claims 1-9,
wherein the protective bellows (58) has a tool opening (72) for the tool spindle (32), and/or
wherein the protective bellows (58) has a workpiece opening (70) for the workpiece holder (30).

11. Machine tool (10) according to one of claims 1-10,
wherein the protective bellows (58) has a plurality of fastening openings (102, 104), in particular adjacent to the tool opening (72) and/or to the workpiece opening (70), and
wherein fastening elements (84, 90) project through the fastening openings (102, 104) in order to clamp the protective bellows (58) adjacent to the tool opening (72) and/or to the workpiece opening (70).

12. Machine tool (10) according to one of claims 1-11,
wherein the protective bellows (58) is formed from an elastic fabric, and
wherein the fabric is in particular a polymer-based fabric that is coated on at least one side.

13. Machine tool (10) according to one of claims 1-12,
wherein the protective bellows (58), prior to the mounting on the mounting collar (64), is a substantially sheet-like structure,
wherein the mounting edge (106) surrounds an inner region (100) of the sheet-like structure, and
wherein at least one tool opening (72) or one workpiece opening (70) is arranged in the inner region (100) of the sheet-like structure.

14. Machine tool (10) according to one of claims 1-13,
wherein a shield (78) in the working space (24) is adjacent to the workpiece opening (70), which shield is movable together with the workpiece holder (30) along at least one translatory axis (92, 94, 96), and wherein the shield (78) is arranged as additional chip protection between the workpiece holder (30) and the protective bellows (58).

15. Machine tool (10) according to one of claims 1-14,
wherein the tension member (110) is a tension band (112) that secures the protective bellows (58) to the mounting collar (64).

## Revendications

1. Machine-outil (10), en particulier machine-outil (10) conçue de manière compacte, pour l'usinage multiaxial, comportant
- un châssis (12),
- une broche à outil (32) comportant un porte-outil (34),
- un logement pour pièce (30), et
- un soufflet protecteur (58),
dans laquelle la broche à outil (32) et le logement pour pièce (30) peuvent être déplacés l'un par rapport à l'autre dans un espace de travail (24) selon au moins deux axes de translation (92, 94, 96),
dans laquelle l'espace de travail (24) est délimité par au moins une paroi de séparation (56) qui présente au moins une ouverture de mouvement (62) et, à proximité de l'ouverture de mouvement (62), une collerette de montage (64) qui entoure, au moins dans certaines sections, l'ouverture de mouvement (62),
dans laquelle au moins la broche à outil (32) ou le logement pour pièce (30) est accouplé au châssis (12) à travers l'ouverture de mouvement (62), dans laquelle le soufflet protecteur (58) présente un bord de montage (106) adapté à la collerette de montage (64),
**caractérisée en ce que**
le bord de montage (106) est pourvu d'une corde de traction (110), et
le soufflet protecteur (58) peut être monté sur la collerette de montage (64) dans un état détendu de la corde de traction (110) et est bloqué sur la collerette de montage (64) dans un état tendu de la corde de traction (110).

2. Machine-outil (10) selon la revendication 1,
dans laquelle l'ouverture de mouvement (62) de la paroi de séparation (56) présente un bord incurvé (66).

3. Machine-outil (10) selon la revendication 2,
dans laquelle l'ouverture de mouvement (62) définit une surface d'ouverture (60) s'étendant de manière tridimensionnelle.

4. Machine-outil (10) selon l'une des revendications 1 à 3,
dans laquelle le soufflet protecteur (58) est un soufflet en tissu et comprend en particulier une imprégnation ou un revêtement étanche et repoussant les liquides.

5. Machine-outil (10) selon l'une des revendications 1 à 4,
dans laquelle la collerette de montage (64) présente une partie formant fond (116) à laquelle se joint au moins dans certaines sections une partie formant front (118) décalée par rapport à l'ouverture de mouvement (62) et qui sert de moyen de blocage de position par complémentarité de forme lorsque la corde de traction (110) est tendue.

6. Machine-outil (10) selon l'une des revendications 1 à 5,
dans laquelle le soufflet protecteur (58) est en outre bloqué sur la collerette de montage (64) par un profilé de serrage (120, 140).

7. Machine-outil (10) selon les revendications 5 et 6,
dans laquelle le profilé de serrage (120, 140) s'appuie sur la partie formant front (118), et dans laquelle le profilé de serrage (120, 140) entoure en particulier la partie formant front (118) avec deux branches (124, 126).

8. Machine-outil (10) selon l'une des revendications 1 à 7,
dans laquelle la broche à outil (32) peut être déplacée en translation directement ou indirectement sur le châssis (12), et/ou
dans laquelle le logement pour pièce (30) peut être déplacé en translation directement ou indirectement sur le châssis (12).

9. Machine-outil (10) selon l'une des revendications 1 à 8,
dans laquelle le soufflet protecteur (58) est conçu en forme d'anneau ou de huit, et dans laquelle la corde de traction (110) est disposée sur le bord de montage (106) du soufflet protecteur (58), et/ou
dans laquelle le soufflet protecteur (58) présente au moins une ouverture auxiliaire (74).

10. Machine-outil (10) selon l'une des revendications 1 à 9,
dans laquelle le soufflet protecteur (58) présente une ouverture pour outil (72) pour la broche à outil (32), et/ou
dans laquelle le soufflet protecteur (58) présente une ouverture pour pièce (70) pour le logement pour pièce (30).

11. Machine-outil (10) selon l'une des revendications 1 à 10,
dans laquelle le soufflet protecteur (58) présente une pluralité d'ouvertures de fixation (102, 104), en particulier à proximité de l'ouverture pour outil (72) et/ou de l'ouverture pour pièce (70), et dans laquelle des éléments de fixation (84, 90) traversent les ouvertures de fixation (102, 104) afin de serrer le soufflet protecteur (58) à proximité de l'ouverture pour outil (72) et/ou de l'ouverture pour pièce (70).

12. Machine-outil (10) selon l'une des revendications 1 à 11,
dans laquelle le soufflet protecteur (58) est formé d'un tissu élastique, et dans laquelle le tissu est en particulier un tissu à base de polymère qui est revêtu au moins d'un côté.

13. Machine-outil (10) selon l'une des revendications 1 à 12,
dans laquelle le soufflet protecteur (58) est, avant le montage sur la collerette de montage (64), une structure sensiblement en forme de surface, dans laquelle le bord de montage (106) entoure une zone intérieure (100) de la structure en forme de surface, et
dans laquelle au moins une ouverture pour outil (72) ou une ouverture pour pièce (70) est disposée dans la zone intérieure (100) de la structure en forme de surface.

14. Machine-outil (10) selon l'une des revendications 1 à 13,
dans laquelle un bouclier (78) est à proximité de l'ouverture pour pièce (70) dans l'espace de travail (24), lequel bouclier peut être déplacé conjointement avec le logement pour pièce (30) le long d'au moins un axe de translation (92, 94, 96), et dans laquelle le bouclier (78) est disposé comme protection supplémentaire contre les copeaux entre le logement pour pièce (30) et le soufflet protecteur (58).

15. Machine-outil (10) selon l'une des revendications 1 à 14,
dans laquelle la corde de traction (110) est une bande de traction (112) qui bloque le soufflet protecteur (58) sur la collerette de montage (64).
